# EUROPEAN PATENT APPLICATION

(11) **EP 1 199 547 A2**
(43) Date of publication of application: **24.04.2002**
(21) Application number: 01203893.1
(22) Date of filing: 16.10.2001
(51) Int. Cl.: G01G 19/08

(54) **Force-sensing fifth wheel**

(30) Priority: 18.10.2000 DK 200001559; 02.02.2001 DK 200100180
(71) Applicant: Diessel Mobile Electronics A/S, 8382 Hinnerup (DK)
(72) Inventor: Jensen, Peter Nyegaard, 8600 Silkeborg (DK); Omstrup, Michael, 8543 Hornslet (DK); Thomsen, Niels Holger Haugbolle, 8382 Hinnerup (DK)
(74) Representative: Plougmann, Vingtoft & Partners A/S

(57) **Abstract**

The present invention relates to a measurement device for measuring loads between a number of load-carrying units and a load-receiving unit of a truck. The invention relates to measuring not only loads in a downward orientated direction, but also measuring loads in obliquely orientated directions in relation to the downward orientated direction. The oblique directions measured are preferably a first direction and a second direction, both being perpendicular to the downward orientated direction and preferably being mutually perpendicular. By also measuring loads in these perpendicular directions, a more precise and reliable measurement is obtained of the load between the number of load-carrying units and the load-receiving unit, because also loads other than in the downward orientated direction are measured and taken into consideration. The invention is especially applicable for measuring loads in connection with truck and optionally trailers of the trucks not having a self-supporting chassis frame, the so-called semi-trailers or trucks having a semi-selfsupporing chassis frame.

## Description

The present invention relates to a measurement device for measuring the load on a truck comprising a tractive unit and a trailer, the tractive unit and the trailer being mutually joined by means of a fifth wheel connection and comprising a number load-carrying units, and said truck having a load received in a load-receptors of at least the trailer, optionally of both the trailer and the tractive unit, said measurement device comprising load cells provided between the number of load-carrying units and the load-receptor of the tractive unit and the trailer of the truck, respectively, and said fifth wheel connection being provided with a number of load cells.

US 6.037.550 describes such an apparatus where a fifth wheel assembly is provided with weight sensing assemblies that are arranged equidistant around a king pin of the fifth wheel assembly. The sensing assemblies are constructed and intended for measuring a load perpendicular to a measuring plane of the sensing assemblies. If the trailer is tilted in relation to such a plane, the sensor is provided with a tilt sensing assembly for compensating for the part of the weight contributing to a weight in a non-perpendicular direction in relation to the measuring plane.

However, there may be forces resulting from the load on the trailer that the tilt sensing assembly cannot take into account. Such forces could be forces between a tractive unit being a tractor and the trailer, which may contribute to a certain signal that the tilt sensing assembly would not detect, especially if the trailer is not tilted.

GB 2 175 345 describes a further method and measurement device for measuring the forces between a tractive unit being a tractor and a trailer mutually connected by a fifth wheel connection with a king pin. The device comprises an intermediate plate on one side of which measuring means are provided for measuring weight of the trailer, and on another side of which measuring means are provided for measuring acceleration and tractive and braking forces between the tractor and the trailer, i.e. for measuring rather great and dynamic forces between the tractor and the trailer. There is no mentioning of compensation on measuring the weight of the trailer if the trailer is tilted in relation to the vertical direction or in relation to the tractor.

As mentioned above, there may be forces resulting from the load on the trailer that may influence the measuring of the weight of the trailer. However, with the device described there is no possibility of knowing these forces because there are no means for measuring these forces in combination with measuring the force perpendicular to the intermediate plate.

The load from the load-carrying vessel onto the fifth wheel connection results primarily in forces in a downward directed orientation. However, there may also be forces from the load carrying vessel that results in forces orientated obliquely to the downwards orientated direction. The magnitude of such oblique forces and the precise direction of such oblique forces is very difficult to evaluate, thus providing a need for either measuring such possible oblique forces or for elimination the influence from such oblique forces. The oblique forces may occur due to many different reasons: the major reasons are that the trailer is tilted and/or that forces exist between the tractor and the trailer when the trailer has been stopped. Prior art has neglected the influence from such obliquely orientated forces, primarily because of the prejudice among the persons skilled in the art that this contribution is negligible. However, this may not be true, but is nevertheless the opinion of the persons skilled in the art, and no one has ever tested whether this opinion is true or false.

Therefore, it is an object of the present invention to provide a measurement device that is capable of measuring the precise load on the truck from the trailer and the total load of the trailer irrespective of the tilting of the trailer and also irrespective of the mutual forces between the truck and the trailer when the truck is parked or stopped during weighing of the load.

This object is obtained by a measurement device wherein the load cells are being provided both for measuring loads in a downwards orientated direction perpendicular to a measuring plane of a number of the load cells and for simultaneously for measuring loads in at least one oblique direction hereto, preferably an oblique direction being perpendicular to the downwards direction.

By also measuring loads in a direction oblique to the primary direction of forces between the truck and the trailer, it is possible to verify the magnitude of forces in other directions than in the downward orientated direction. Thereby, it will be possible to take into account the forces from the load due to any tilting of the trailer and to take into account the forces from the load causing any mutual forces between the truck and the trailer that may contribute to a load in the downward direction. A complete and accurate value may thus be calculated of the forces resulting from the load of the trailer in the fifth wheel connection, also taking into account the tilting of the trailer and the mutual forces between the tractive unit and the trailer and not only taking into account the forces directed in the downward orientated direction.

The object may also be obtained by a measurement device wherein the load cells are being provided for measuring loads only in a downward orientated direction perpendicular to a measuring plane of a number of the load cells and where a simultaneous locking is provided of any mutual displacement between the tractive unit and the trailer in any oblique direction to the downward orientated direction.

By locking the tractive unit and the trailer in relation to each other in any obliquely orientated direction different than the downward orientated direction then it is possible to limit the measuring to the downward orientated direction knowing that the load cells are not influenced by obliquely orientated forces that may contribute to the measuring of the downward orientated weighing. The locking of the mutual displacement may be effected by permanent means limiting the mutual displacement between the tractive unit and the trailer to displacements in the downward orientated direction, or opposite an upward orientated direction. Alternatively, the locking may be effected by means of releasable means only locking the mutual displacement in obliquely orientated directions either during weighing or during driving and transportation. Locking during weighing limits the measuring to measuring of forces orientated in the downward or upward direction. Locking during driving and transportation adds the need for measuring of obliquely orientated forces but limits the need for heavy duty load cells capable of taking up the loads in the oblique directions during acceleration, braking and transportation.

The obliquely orientated forces could arise because of a mutual sliding between the tractive unit and the trailer resulting in a force directed substantially perpendicular to the downward orientated direction. The oblique forces could also arise because of a tilting of the trailer, either a tilting round an axis extending longitudinally to a longitudinal axis of the trailer and/or a tilting round an axis extending transversely to the longitudinal axis of the trailer. The longitudinally orientated forces may occur because of a mutual sliding between the tractive unit and the trailer backwards or forwards either because of the truck being parked on a slope when measuring the weight, or because the wheels of the trailer or the wheel of the tractive unit are parked against a kerb or any other obstacle against the wheel. The transversely orientated forces may occur because of parking the trailer and/or the tractive unit on an uneven surface, either because of the surface sloping sideways or because of the wheels of the trailer and/or tractive unit being parked as example with a set of wheels along one side of the tractive unit/or trailer on a kerb.

It is also an object of the present invention to provide not only measurement device that is capable of measuring the precise load on the truck from the trailer and the total load of the trailer irrespective of the tilting of the trailer and also irrespective of the mutual forces between the truck and the trailer when the truck is parked or stopped during weighing of the load, but also to provide a fifth wheel connection which is capable of eliminating the sudden loads that occur in a truck between a tractive unit and a trailer when starting and braking the truck and when towing the trailer by the tractive unit.

This object is obtained by a connection between a tractive unit and a trailer, the tractive unit and the trailer being mutually joined by means of a fifth wheel connection, said fifth wheel connection comprising a king-pin attached perpendicular to the plane of an intermediate plate, and where the intermediate plate is capable of displacing in at least a substantially horizontal plane, and where the displacing is biased by spring members.

A fifth wheel connection, where the king-pin is attached to an intermediate plate, and where there is a possibility of the intermediate plate of displacing under a spring biasing results in that sudden loads that are subjected to the tractive unit and the trailer when the truck is starting, braking and towing are reduced. The spring members will function as shock absorbers, which take up the initial loads that, occur when there are sudden movements between the tractive unit and the trailer. These sudden movements resulting in the sudden loads between the tractive unit and the trailer is not only minor damaging to the truck itself but may also be damaging to the truck driver. Thus, reducing these sudden loads will increase the durability of the parts of the truck that pass on the loads between the tractive unit and the trailer and also increase the durability of other parts of the truck such as suspensions, axles and wheels. Furthermore, the comfort for the truck driver will be increased and the physical damage of the truck driver will be decreased.

In a preferred embodiment of a connection according to the invention, an annular member is provided around the intermediate plate and establish a cavity within which the intermediate plate is capable of displacing, and a number of spring members projects from an annular member towards the cavity within the annular member, where front ends of the spring members are intended for abutting an outer circumference of the intermediate plate, and where the spring members are capable of taking up loads from the king-pin and the intermediate plate in at least a substantial horizontal plane.

By providing the spring members in an annular member and letting front ends of the spring members abut the intermediate plate, then a reference between the annular member and the intermediate plate is established via the spring members. Thus the annular member may be in connection with either the tractive unit or the trailer and, respectively, the intermediate plate with the king-pin may be in connection with trailer or the tractive unit.

In an even more preferred embodiment of a connection according to the invention, the intermediate plate is contained in the cavity within the annular member and the intermediate plate also is contained in the cavity between a bottom plate and a top plate between which the annular member is placed, and where the intermediate plate by the bottom plate and the top plate is limited in displacement in a vertical direction.

Limiting the displacement of the intermediate plate in the vertical direction by means of a top plate and a bottom plate ensures that the displacement of the intermediate plate and the king-pin only takes place substantially horizontally. Also, by providing a top plate and a bottom plate between which the annular member is placed, makes it possible to fully close the cavity within the annular member. This means that it is possible to lubricate the intermediate plate in order to limit the friction when the intermediate plate is displacing and preventing dust, dirt and other not wanted contamination from entering the cavity and thereby limiting the lubricating capacity of any lubricant within the cavity.

According to the invention, a measurement device to be used in combination with the above-mentioned connection comprises at least a number of second load cells for measuring loads in a substantial horizontal direction, and where the measurement is provided by measuring a substantial horizontal displacement of a king-pin and of an intermediate plate which the king-pin is attached to in relation to an annular member within which the intermediate plate is contained.

Preferably, the measurement device to be used in combination with the above-mentioned connection also comprises a number of first load cells for measuring loads in a substantial vertical direction, and where the measurement is provided by measuring a substantial vertical displacement of a king-pin unit which are attached to the load cells in relation to a chassis of a trailer, alternatively in relation to a chassis of a tractive unit, which the load cells are attached to.

The before-mentioned fifth wheel connection according to the invention is suitable for measuring especially loads in a substantially horizontal plane because a displacement takes place in a substantially horizontal plane. Accordingly, the measurement device to be used in combination with the before-mentioned connection at least comprises second load cells for measuring the loads in a substantially horizontal plane. However, if the fifth wheel connection is attached to the chassis of the tractive unit or of the trailer by means of first load cells then it is possible also to measure loads in e vertical direction.

The invention will hereafter be described in more detail with reference to the accompanying drawing where
fig. 1A and 1B are schematic drawings of a first application of a measuring device according to the invention on a possible embodiment of a truck,
fig. 2A and 2B are schematic drawings of a second application of a measuring device according to the invention on another possible embodiment of a truck,
fig. 3A and 3B are schematic drawings of a third application of a measuring device according to the invention on still another possible embodiment of a truck,
fig. 4A and 4B are schematic drawings of a fourth application of a measuring device according to the invention on still another possible embodiment of a truck,
fig. 5A and 5B are schematic drawings of a fifth application of a measuring device according to the invention on still another possible embodiment of a truck,
fig. 6A and 6B show an embodiment of a first type of measuring device according to the invention,
fig. 7A and 7B show an embodiment of a second type of measuring device according to the invention,
fig. 8A, 8B and 8C show an embodiment of a possible configuration of the loads cells in a fifth wheel connection between a tractive unit and a trailer of a truck,
fig 9A, 9B and 9C show an embodiment of a possible fifth wheel connection according to the invention and comprising a preferred type of measuring device according to the invention with load cells for measuring vertical and horizontal loads, and
fig. 10A, 10B and 10C show details of the fifth wheel connection according to the invention and show the embodiment of the preferred measuring devices.

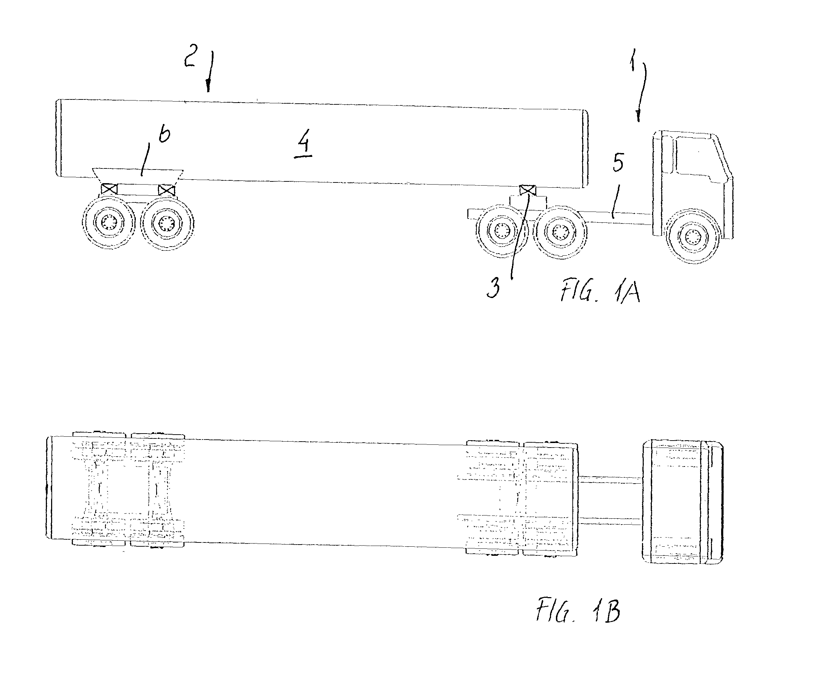

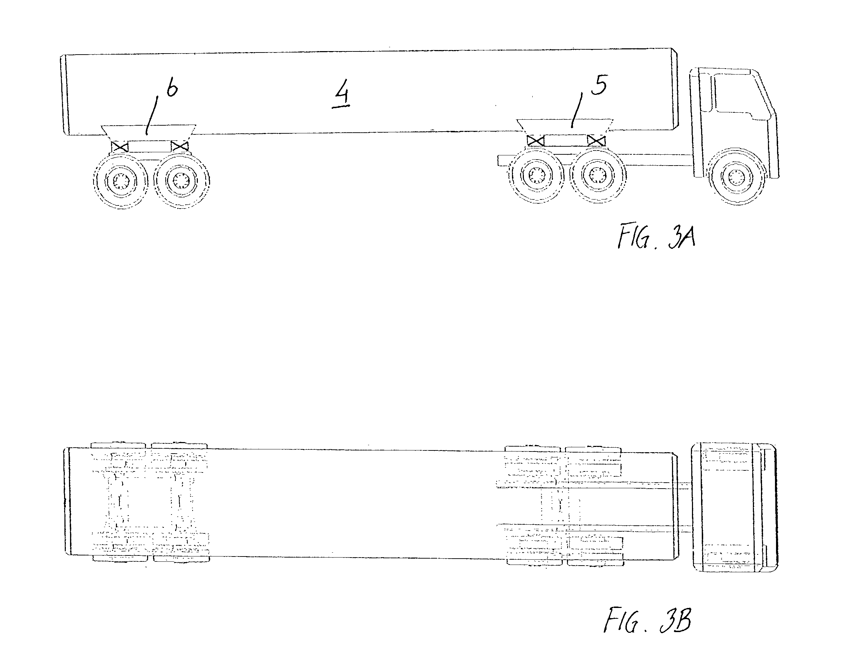

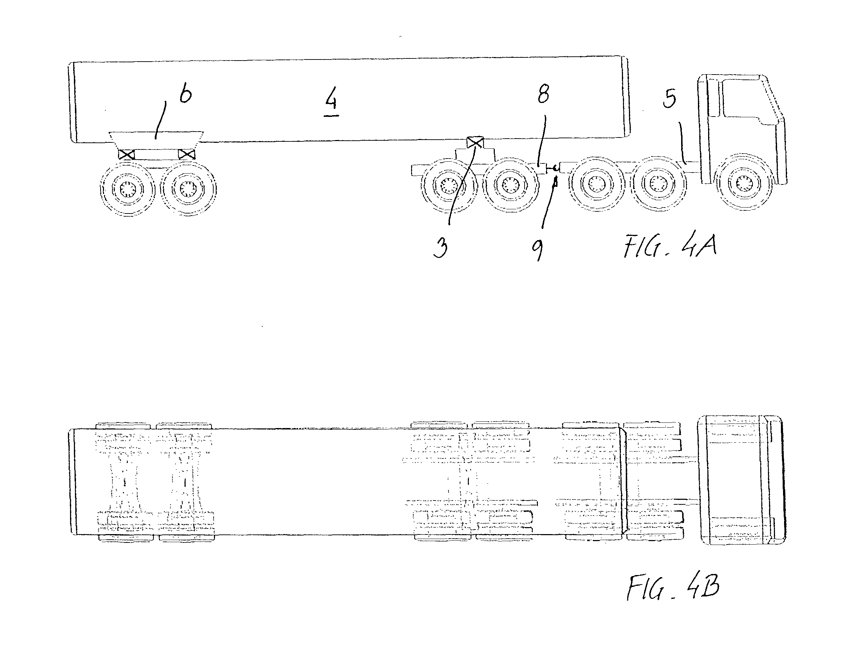

Fig. 1A and 1B, fig. 2A and 2B and fig. 5A and 5B schematically show a truck comprising a tractive unit 1 and a trailer 2. Fig. 3A and 3B and fig. 4A and 4B schematically show a truck comprising a tractive unit and not comprising a trailer. The tractive unit and the trailer, if comprised, are mutually connected by means of a fifth wheel connection 3. In the embodiment of a truck as shown the trailer comprises a load-receiving means, a so-called load-receptor 4, in the shape of a tank for transporting liquid or granular goods. However, any other kind of load-receptors of a trailer or a truck itself could be used such as a platform for transporting goods such as gravel, boxes of goods etc or a frame structure for transporting logs of wood or containers. The trailer is preferably a so-called semi-trailer or the truck preferably having a semi-selfsupporting chassis frame, where the load-receptor is self-supporting.

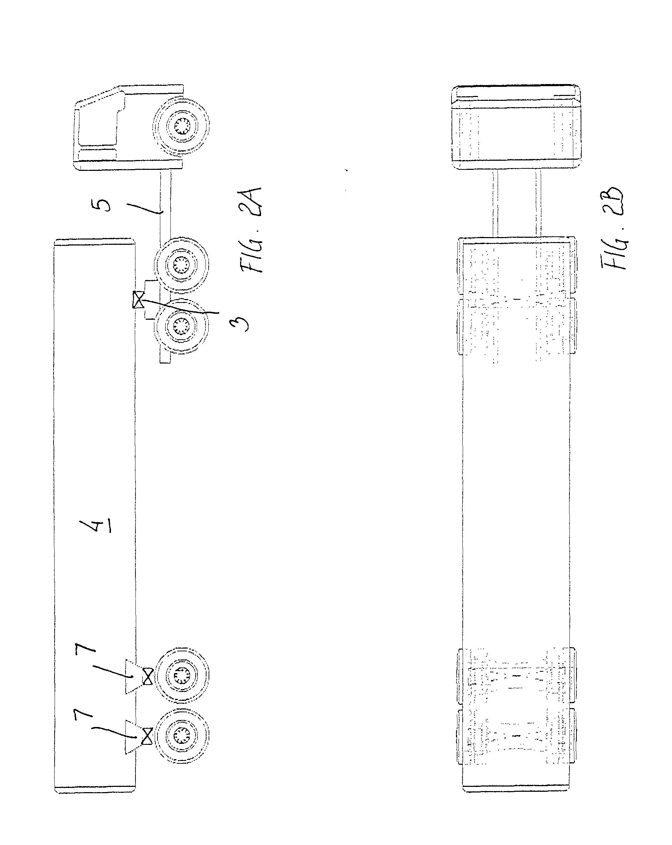

In fig 1A and 1B, the trailer 2 is rotatable connected, at the front end of the load-receptor 4, to a chassis frame 5 of a tractive unit 1 through a fifth wheel connection 3, and at the rear end of the load-receptor 4 the trailer 3 is provided with a small chassis frame 6 with axles for wheels, said chassis frame 6 being rigidly attached to the load-receptor 4. In fig. 2A and 2B the trailer 2 is rotatable connected, at the front end of the load-receptor 4, to a chassis frame 5 of the tractive unit 1 through a fifth wheel connection 3, and at the rear end of the load-receptor 4 the trailer 2 is provided with structures 7 attached to the trailer, each of said structures 7 being provided with axles for the wheels, and said structures 7 being rigidly attached to the load-receptor 4.

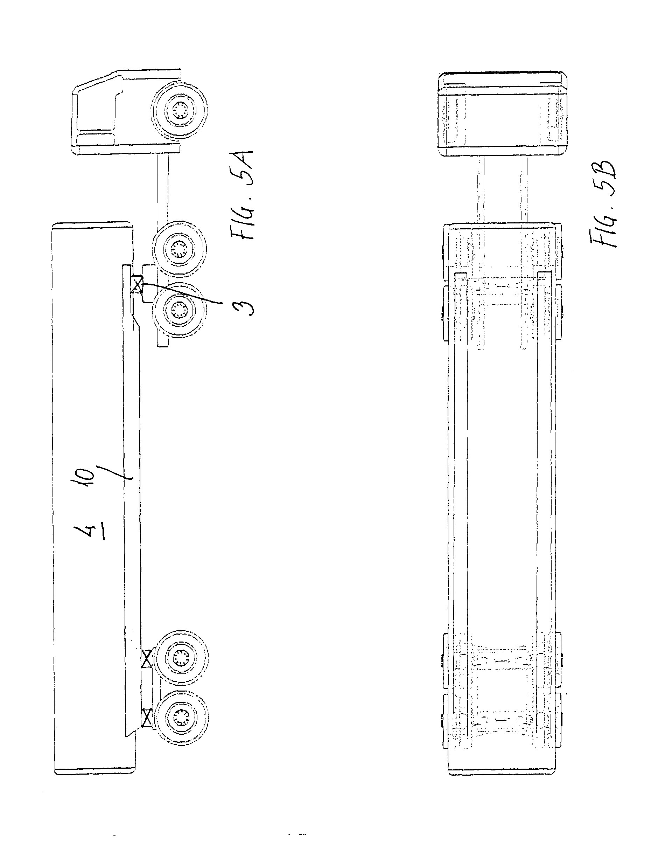

In fig. 3A and 3B the load-receptor 4, at the front end of the load-receptor 4, is rigidly connected to a chassis frame 5 of the tractive unit 1, and at the rear end of the load-receptor 4 a small chassis frame 6 is rigidly attached to the load-receptor 4. In fig. 4A and 4B the trailer 2 comprises, at the front end of the load-receptor 4, a small chassis frame 8 being rotatable attached to the load-receptor 4 through a fifth wheel connection 3, and at the rear end of the load-receptor 4 a small chassis frame 6 is rigidly attached to the load-receptor 4. The small chassis frame 8 at the front end of the load-receptor actually constitutes a tractive unit in relation to the load-receptor, because a tractive force from the actual tractive unit 1, namely the tractor, is transferred from the tractor being the actual tractive unit to the small chassis frame also constituting a tractive unit, through a hook-and-eye connection 9, and further on to the load-receptor through the fifth wheel connection 3. In fig. 5A and 5B the trailer is provided with a chassis frame 10 extending all the way from the fifth wheel connection 3 to the axles of the wheels.

The trailers and the truck chassis, respectively, of fig. 1A, 1B, fig. 2A, 2B, fig. 3A, 3B and fig. 4A, 4B are called semi-trailers and semi-selfsupporting truck chassis, whereas the trailer of fig. 5A, 5B just is called a trailer having a self-supporting chassis. However, semi-trailers also constitute trailers within the meaning of the present application. Other embodiments of chassis frames or structures provided axles for the wheel and in one way or the other secured to the load-carrying vessel may be envisaged.

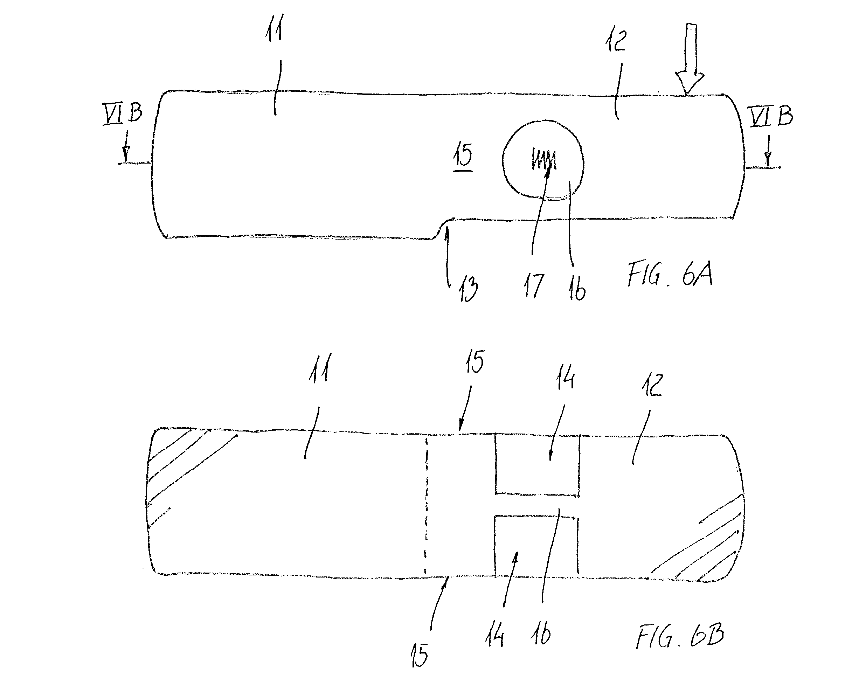

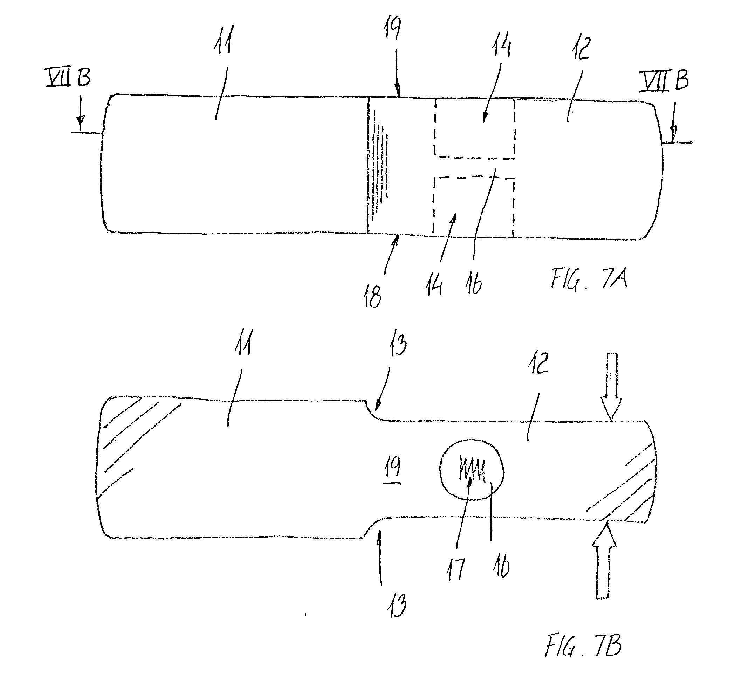

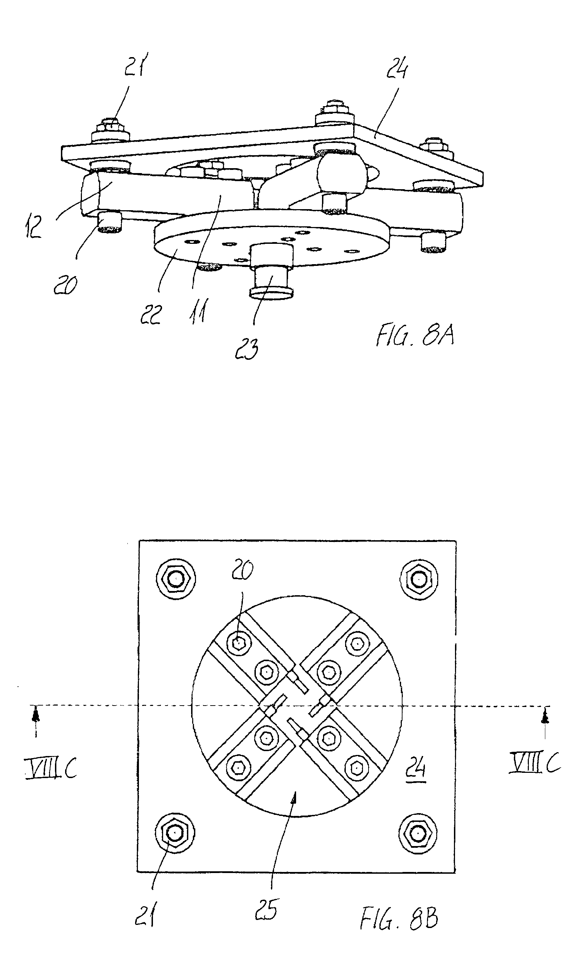

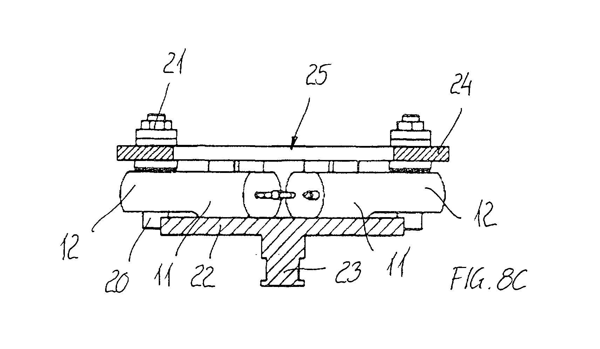

The fifth wheel connection 3 is provided with load cells, shown by means of a cross. The load cells are preferably, but not necessarily of one of the types shown in fig. 6A, 6B and/or 7A, 7B and provided in any configuration. The load cells provided in the fifth wheel connection may comprise any number of load cells and any configuration of the number of load cells. A possible configuration, but necessarily not a preferred configuration, of a number of load cells, is shown in fig. 8A-8C. Preferably, also the rigidly attached small chassis frames with axles for the wheels are provided with load cells, also shown with a cross, however preferably load cells and configurations of these which are already known. Furthermore the rigidly attached chassis frame shown in fig %A and 5B is provided with load cells, also shown with a cross, however preferably load cells and configurations of these which are already known.

The number of load cells in the fifth wheel connection is preferably provided in connection with the trailer with no specific parts of the load cells provided on the tractor. Thereby, a mutual dependency between the tractor and the trailer is avoided. Thus, any tractor may be connected with any trailer provided with the measuring device. This is advantageous where a number of tractors are to drive with the same trailer. As mentioned, the axles of the wheels of trailer are also provided with load cells. The total weight of the load carrying-vessel including any load may thus me measured and if the weight of the trailer itself including the load carrying vessel is known, which is very easy to establish if not indicated on the trailer itself, then it is possible to load the load-carrying vessel to the maximum of the allowed total load on each of the axles of the trailer. The need of a weighbridge is thereby eliminated.

Fig. 6A and 6B shows a first type of load cell for a measuring device according to the invention. The load cell is constituted by a piece of solid metal that is specifically shaped for measuring loads in a downwards direction shown with an arrow. The load cell comprises a fixed part 11 and a projecting part 12, the fixed part and the projecting part being divided by a single sheer 13. Other divisions between the fixed part and the projecting part could be used, as example just a small notch in place of the sheer. The load cell is intended for being rigidly secured to a reference structure along the fixed part of the load cell and being secured to the structure being measured along the projecting part of the load cell. The projecting part of the load cell is provided with holes 14 that only partly penetrate the projecting part of the load cell from lateral surfaces 15 of the load cell. A cross section of the load cell is shown in fig. 6B. The cross section is taken along a plane perpendicular to the direction of the forces that the load cell is intended for measuring. A wall-like member 16 separates the two holes 14 each extending from the lateral surfaces 15 of the load cell. Strain gauges 17 are attached in a selected pattern to surfaces of the wall-like member in order to measure the forces applied by any load in a direction parallel to the surfaces of the wall-like member. The pattern shown is just an example of how attaching of the strain gauges could be effected, other patterns could be used for obtaining as good a measurement as possible.

Fig. 7A and 7B shows a second type of load cell for a measuring device according to the invention. The load cell is also constituted by a piece of solid metal that is specifically shaped for measuring loads in sideways directions shown with arrows. The load cell comprises a fixed part 11 and a projecting part 12, the fixed part and the projecting part being divided by a double sheer 13, one on each side of the load cell. Other divisions between the fixed part and the projecting part could be used, as example just small notch in place of the sheers The load cell is intended for being rigidly secured to a reference structure along the fixed part of the load cell and being secured to the structure being measured along the projecting part of the load cell. The projecting part of the load cell is provided with holes that only partly penetrate the thinner part of the load cell from a bottom surface 18 and a top surface 19 of the load cell. A cross section of the load cell is shown in fig. 7B. The cross section is taken along a plane perpendicular to the direction of the forces that the load cell is intended for measuring. A wall-like member 16 separates the two holes 14 extending from the bottom surface 18 and top surface 19 of the load cell. Strain gauges 17 are attached to surfaces of the wall-like member in order to measure the forces applied by any load in a direction parallel to the surfaces of the wall-like member.

The load cells shown in the above figures are preferred types of load cells. However, other types and shapes of load cells could easily be used in stead, such as load cells having a shape of a parallelogram having fixed parts at each side of the parallelogram and having projecting parts in the middle between the fixed parts. Still other load cells could be used having a shape being developed for measuring specific loads in specific directions in relation to the load cell.

Fig. 8A, 8B and 8C show a possible configuration of load cells as the one shown in fig. 6A and 6B. The fixed parts 11 of the load cells are attached, by means of bolts 20, to a bottom plate 22 being provided with a king-pin 23 constituting a part of the fifth wheel connection, thus the bottom plate 22 being at least the reference structure in relation to the load cells. The projecting parts 12 of the load cells are attached, by means of bolts 20 and nuts 21, to a top plate 24 being provided with a hole 25 in order to minimise weight and being intended for being secured to the trailer, thus the top plate 24 being at least part of the structure measured. The shown configuration of the load cells are capable not of measuring any oblique forces between the bottom plate and the top plate, and thus between the tractive unit and the trailer, but of eliminating the influence of such oblique forces to the measuring in a downward direction being perpendicular to the bottom plate and the top plate.

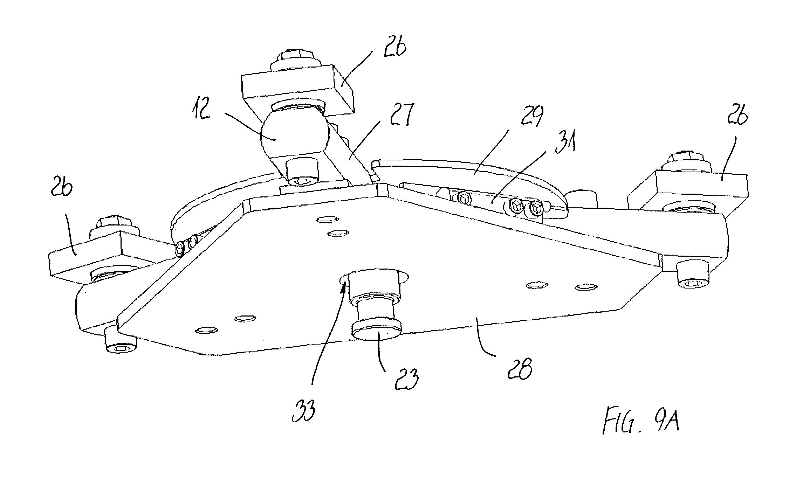

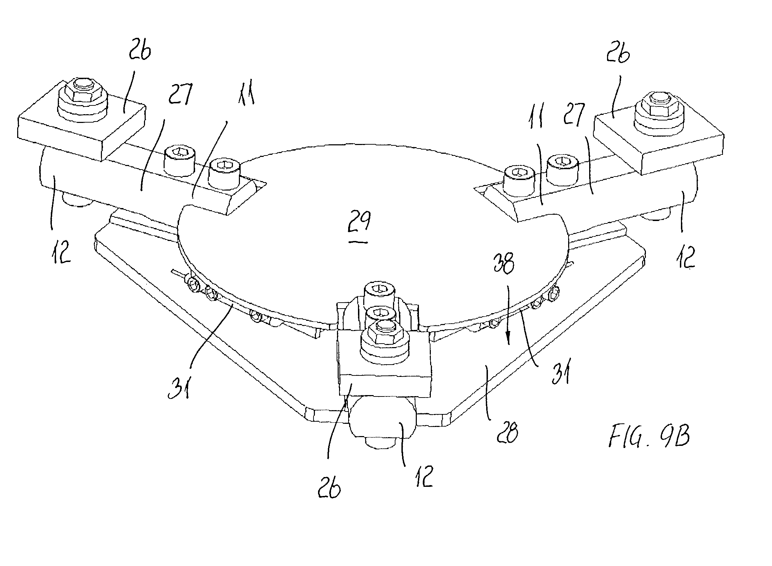

Optionally, in stead of having four load cells configured equidistant around the king pin, three load cells configured around the king pin is preferred. Three load cells only makes it easier to measure loads in different directions and limits the risk of too high inaccuracy in the signals received from the number of load cells. Furthermore, three load cells only ensures that the levelling and balancing between the bottom plate and the top plate always is accomplished due to the built-in stability of members supported at only three points. The three load cells is preferably configured in a star-like pattern with each of the load cells extending in planes having a mutual angular displacement of 120°. This is shown in fig 9A, 9B and 9C.

Fig. 9A, 9B and 9C show a connection employing a king-pin in order to provide a fifth wheel connection. The figures also show another possible and preferred configuration of load cells. The fixed parts 11 of a first set of three first load cells are attached, by means of bolts 20, to a bottom plate 22 constituting a part of the fifth wheel assembly. The projecting parts 12 of the first load cells are attached, by means of bolts 20 and nuts 21, to parts of the chassis. In the embodiment shown, the projecting parts of the first load cells are attached to small bricks 26 that may be secured to the chassis of the trailer as example by way of welding the small bricks to the chassis.

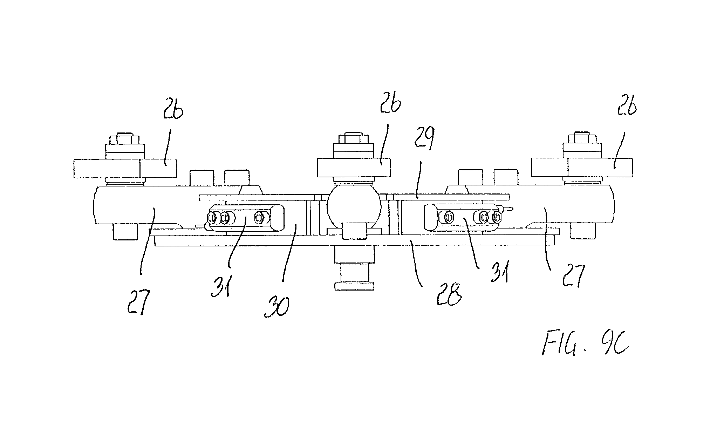

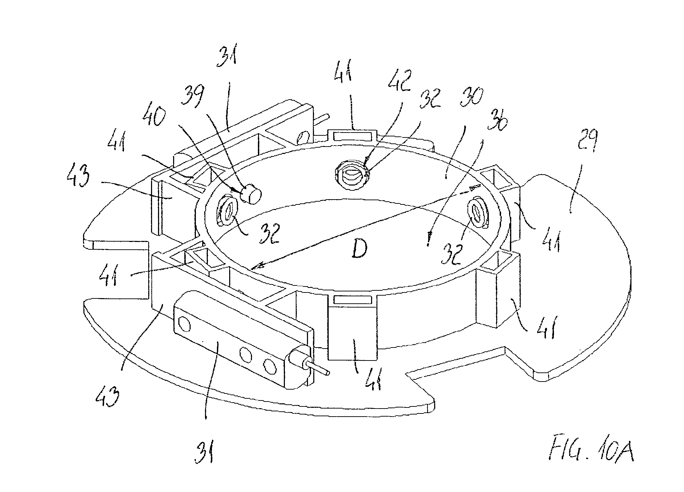

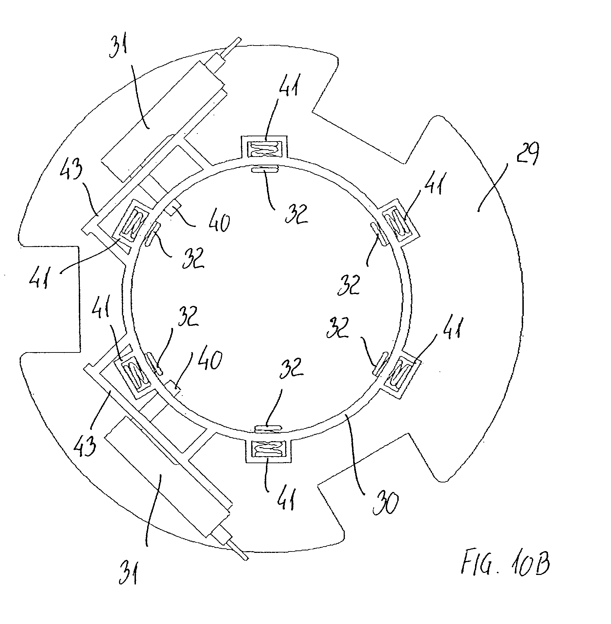

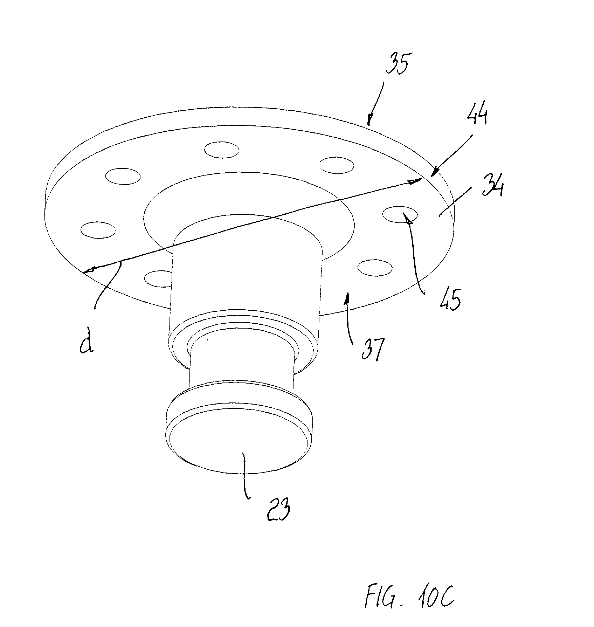

The vertical load between the chassis and the trailer is measured by the set of three first load cells 27, and the load is being measured between the chassis, which the projecting parts 12 are attached to, and a bottom plate 28, which the fixed parts 11 are attached to. Thus, the bottom plate 28 is the reference structure in relation to the set of three load cells 27. A top plate 29 is provided above the bottom plate 28. The top plate 29 is provided with a downward extending annular member 30 (see fig 10A and 10B). Along an outer circumference of the annular member 30 a set of second load cells 31 are provided. Furthermore a set of spring members 32 (see fig 10A and 10B) are provided along the circumference of the annular member.

A king-pin 23 extends downwards through a hole 33 in the centre of the bottom plate. The king-pin is attached to an intermediate plate 34 (see fig. 10C). The attachment of the king-pin 23 to the intermediate plate 34 may be established during manufacture of the king-pin unit or it may be a common known king-pin attached to the plate and provided as a standard part. The intermediate plate 34 is contained in a cavity established within the annular member 30 between the bottom plate 28 and the top plate 29. The intermediate plate 34 may move freely in a horizontal plane and is only limited in its movement in the horizontal plane by the spring members 32 and the set of second load cells 31. However, the intermediate plate 34 is limited in its movement vertically by the bottom plate 28 and the top plate 29. A small clearance may be provided for the intermediate plate between the bottom plate and the top plate in order not to limit the free movement in the horizontal plane due to friction. Accordingly, lubrication is preferably provided at least between a top surface 35 (see fig. 10C) of the intermediate plate 34 and a bottom surface 36 (see fig. 10A and 10B) of the top plate 29, and preferably also between a bottom surface 37 (see fig. 10C) of the intermediate plate 34 and a top surface 38 of the bottom plate 28.

As mentioned, a set of further second load cells 31 are provided at the outside of the annular member 30. In the embodiment shown, the set of second load cells has load-transmitting means in the shape of small rods 39 (see fig 10A and 10B). The load-transmitting means extend from the outside diameter of the annular member through holes 40 in the annular member to the cavity within the annular member. Preferably, the annular member is circular (see fig. 10A and 10B) and a clearance is established between an inner diameter D of the annular member 30 and an outer diameter d of the intermediate plate 34. The inner diameter D of the annual member is larger than the outer diameter d of the intermediate plate. The spring members 32 are provided evenly around the circumference of the annular member.

Thus, the measuring device shown constitutes an integrate unit of a fifth wheel construction. As mentioned, the measuring device is attached to the chassis of the trailer by means of the small bricks being secured to the chassis, or alternatively by securing the projecting parts of the load cells themselves to the chassis of the trailer and thus leaving out the small bricks. In the embodiment shown, the bottom plate has a substantial triangular shape due to the fact that the set of first load cells contain three load cells. In alternative configurations, the bottom plate may have other shapes such as square if the set of first load cells contain four load cells. The bottom plate may even have any other shape such as polygonal or round if perhaps the first set of load cells contain an even different number of load cells.

An upper edge of the annular member, which is extending downward from the top plate, is attached to the bottom surface of the top plate (see fig 10A and 10B). In the embodiment shown, it is not shown how the edge of the annular member is attached to the top plate. The attachment may be a permanent attachment by welding the edge of the annular member to the top plate. However, the attachment may also be a releasable attachment by bolting the annular member to the top plate. By making the top plate releasable in relation to the annular member it is possible to gain access to the cavity within the annular member in order to service the intermediate plate and the king-pin, as example lubricating the intermediate plate or replacing the intermediate plate together with the king-pin.

Fig. 10A and 10B show the top plate 29 with the downward orientated annular member 30. In the figure, the top plate is shown upside down, i.e. it is the bottom surface 36 of the top plate, which is shown, the downward orientated annular member 30 is shown extending upwards form the bottom surface of the top plate. The annular member 30 is provided with a number of small kind of pockets 41, in the embodiment shown six pockets, for taking up a rear end of spring members, which in the embodiment shown are spiral springs. Other spring members such as disk springs, elastomeric spring members or the like may be used in stead. The front end of the spiral springs extends through holes 42 in the annular member 30 and into the cavity established within the annular member.

Along the outer circumference of the annular member 30 fixtures 43 are provided for attaching the set of second load cells 31 to the annular member. Thus, the fixed ends 11 of the second load cells 31 are attached to the fixtures 43 along the outer circumference of the annular member. The projecting ends 12 of the second load cells 31 are provided with the load transmitting means 39 in the shape of small rods extending through the holes 40 in the annular member 30 and into the cavity within the annular member. Front ends of the load-transmitting means 39 are intended to abut an outer circumference 44 of the intermediate plate 34 (see fig 10C). Also the front ends of the small spiral springs 32 are intended to abut the outer circumference 44 of the intermediate plate 34.

The spiral springs are intended to take up some of the horizontal loads that occur when the trailer is being pulled by the tractive unit. This reduces the demand of the load cells for taking up high horizontal loads. However, this makes it necessary to calibrate the load cells together with the spring members in order to know how much of the horizontal loads that the spring members accumulate and how much load is taken up by the load cells. Alternatively, load cells being capable of taking up higher horizontal loads could be provided along the circumference of the annular member. If this latter solution is chosen, it is however necessary to have at least three load cells and preferably more load cells with load-transmitting means extending into the cavity within the annular member so that the intermediate plate is properly supported horizontally within the annular member.

Fig. 10C show the king-pin 23 itself together with the intermediate plate 34, which the king-pin is attached to. As common known king-pins, the king-pin is provided with an annular groove to be used when connection the tractive unit with the trailer. In the embodiment shown, the intermediate plate 34 is circular with the outer circumference 44.

As mentioned, the outer circumference 44 of the intermediate plate 34 is intended to be horizontally supported by the front ends of the spiral springs 32 and the front ends of the load-transmitting rods 39. In the embodiment shown, the king-pin is welded to the centre of the intermediate plate. The intermediate plate is provided with holes 45 extending through the plate. The holes may be beneficial when lubricating the lower surface 37 and the upper surface 35 of the plate. The lubricant can be accumulated in the holes and the lubricant may pass form the lower surface to the upper surface and visa versa.

In the above figures 9A-9C and 10A-10C the fifth wheel connection is illustrated and described with reference to a connection comprising second load cells for measuring loads in a substantial horizontal plane as well first load cells for measuring loads vertically. However, it will be possible to provide the connection itself without employing the load cells. It will also be possible to provide the connection together with either the set of second load cells or the set of first load cells in stead of both sets of load cells.

In alternative configurations, one or more of the load cells in the above-mentioned configurations with four load cells described and shown or in the above-mentioned configurations with three load cells described may be substituted by the load cell shown in fig. 5A and 5B. Thereby it is possible both to measure any forces in the downward orientated direction resulting from the load on the top plate and to measure any forces in directions perpendicular to the downward orientated direction, i.e. parallel with the top plate and the bottom plate. In such an alternative configuration, two neighbouring load cells of the above-mentioned configuration should be substituted by two of the load cells shown in fig. 5A and 5B. Thereby, any forces may be measured in a first direction perpendicular to the downward orientated direction and any forces may be measured in a second direction, also perpendicular to the downward orientated direction and perpendicular to the first direction. Thus, the forces measured are those directed along axes of an orthogonal system of co-ordinates. Possibly, the number of load cells could be limited to three load cells, one each for measuring the forces along the axes of the orthogonal system of co-ordinates.

In a still alternative configuration, each of the load cells or one or more of the number of load cells could be used to measure loads in different directions. Selected strain-gauges could be applied in selected patterns to the wall-like member and/or to selected parts of the periphery of the holes extending from the lateral surfaces to the wall-like member in order to measure loads in specific directions, as example in the downward orientated direction and in one or more directions perpendicular to the downward orientated direction. As example, three strain gauges may be applied on the wall-like member in a star-like pattern with wires of the strain gauges extending with a mutual angular displacement of 120 ° in order to measure loads in different directions.

In the configuration shown and in the alternative configuration described, the load cells are orientated so that the wall-like members in the load cells (see fig. 4A, 4B, 5A and 5B) are orientated along perpendicular axes of an orthogonal system of co-ordinates. However, the load cells could be configured so that the wall-like members are orientated along other directions than individually perpendicular directions, as example along axes extending with an equal mutual angular displacement of 120°. Also, the load cells need not lie in the one and same plane but may be directed along two or more different planes.

As an alternatively to having each of the load cells, that are intended for measuring loads in one selected direction, or to having one or more load cells, that are intended for measuring loads in more directions, a couple of load cells which each are intended for measuring loads in a selected direction could be built together in order to provide a unit of two or more load cells that is capable of measuring loads in different directions.

In the configuration shown in fig. 6A-6C and in the figures 1A, 1B to 3A, 3B it is shown that the load cells all are situated in direct relationship to the fifth wheel connection. This is absolutely necessary for measuring the forces in the downward orientated direction, but need not be absolutely necessary for measuring the possible forces in other directions than the downward orientated direction. It may be possible to measure as example forces along a plane perpendicular to the downward orientated direction by means of load cells not provided in direct relationship with the fifth wheel connection.

As example, a rigid rod may be provided between the tractive unit and the trailer, perhaps extending from a rear end of the tractive unit to an intermediate point on the trailer between the fifth wheel connection and the chassis frame or the structures provided with the axles for the wheels of the trailer. The rod could be provided with strain gauges attached to the rod for measuring a possible elongation of the rod because of oblique forces between the tractive unit and the trailer, preferably for measuring forces orientated perpendicular to the downward orientated direction. Any elongation of the rod is a consequence of any oblique forces orientated along the rod and is directly measurable by measuring the elongation of rod.

As another example, a wire may be provided between the tractive unit and the trailer, perhaps extending from a rear end of the tractive unit to an intermediate point on the trailer between the fifth wheel connection and the chassis frame or the structures provided with the axles for the wheels of the trailer. The wire is preferably spring suspended so that the wire is always tightened by means of a spring member such as a spiral spring extending in continuation of the wire. Any elongation of the wire or of the spring member is a consequence of any oblique forces orientated along the wire or along the spring member and is directly measurable by measuring the elongation of the wire or the spring member.

Still alternatively to measuring loads in any oblique directions to the downward orientated direction, it could be possible to lock any possible mutual displacement between the tractive unit and the trailer so that the load cells are not influenced by any forces oblique to the downward orientated direction. Thereby, there is no need for special configurations taking into account any oblique forces. However, there may be a risk of the oblique forces still contributing to the magnitude of the downward orientated force. Therefore it is preferred that the locking of any mutual displacement between the tractive unit and the trailer takes into account a possible sliding by means of ball bearings or ball socket between the load cells and the load carrying vessel that the load cells are to measure the weight of.

Locking of the mutual displacement in obliquely orientated directions may be a permanent locking by means of guides and sleeves that the guides may slide in, preferably with the sleeves provided with ball bearings or roller bearings for the guides. Such guides and sleeves may substitute the normally used king-pin in relation to fifth wheel connections or may supplement a king-pin. Locking of the mutual displacement in obliquely orientated directions may also be a releasable lock locking the mutual displacement during weighing when the truck is parked, perhaps effected by a number of pins being provided in the fifth wheel connection and maybe being actuate when pulling the parking brake of the truck. Locking the mutual displacement only during parking creates a need for load cells capable of assimilation and transferring loads in the obliquely orientated directions during driving, but eliminates the need for load cells capable of measuring loads in the obliquely orientated directions. Optionally, locking of the mutual displacement in obliquely orientated directions may still be a releasable lock, but locking the mutual displacement during driving, and un-locking the mutual displacement during weighing when the truck is parked. Locking the mutual displacement only during driving eliminates the need for load cells capable of assimilation and transferring loads in the obliquely orientated directions during driving but creates the need for load cells capable of measuring loads in the obliquely orientated directions.

## Claims

**1.** A measurement device for measuring the load on a truck comprising a tractive unit and a trailer, the tractive unit and the trailer being mutually joined by means of a fifth wheel connection and comprising a number of load-carrying units, and said truck having a load received in a number of load-receptors of at least the trailer, optionally of both the trailer and the tractive unit, said measurement device comprising load cells provided between the number of load-carrying units and the number of load-receptors of the tractive unit and the trailer of the truck, respectively, and said fifth wheel connection being provided with a number of load cells, and said load cells being provided both for measuring loads in a downwards orientated direction perpendicular to a measuring plane of a number of the load cells and for simultaneously measuring loads in at least one oblique direction hereto, preferably an oblique direction being perpendicular to the downwards direction.

**2.** A measurement device for measuring the load on a truck consisting of a tractive unit and a number of load-carrying units, and said truck having a load received in a number of load-receptors of the truck, said measurement device comprising load cells provided between the number of load-carrying units and the number of load-receptors of the tractive unit, and said load cells being provided both for measuring loads in a downwards orientated direction perpendicular to a measuring plane of a number of the load cells and for simultaneously measuring loads in at least one oblique direction hereto, preferably an oblique direction being perpendicular to the downwards direction.

**2.** A measurement device according to claim 1, wherein the load cells at least comprise a number of load cells for measuring the load in the downwards orientated direction, a number of load cells for measuring the load in a first oblique direction and a number of load cells for measuring the load in a second oblique direction.

**3.** A measurement device according to claim 1, wherein the load cells comprise a number of load cells each intended for both measuring the load in the downwards orientated direction and measuring the load in at least one oblique direction, preferably each intended for at least measuring the load both in the downwards orientated direction and in the first oblique direction and in the second oblique direction.

**4.** A measurement device according to claim 2 and claim 3, wherein the first oblique direction and the second oblique direction are perpendicular to each other, and where the said directions are lying in a plane parallel to the measuring plane of a number of the load cells.

**5.** A measurement device according to claim 4, wherein the said oblique directions are orientated in a direction parallel to the measuring plane of a number of the load cells and also are directed perpendicular to each other.

**6.** A measurement device according to any of the preceding claims wherein the fifth wheel connection is provided with at least three load cells, and where the at least three load cells are provided in a triangle lying in a plane parallel to the measuring plane of a number of the load cells.

**7.** A measurement device according to claim 6, wherein the fifth wheel connection is provided with three load cells and where the three load cells are provided in an isosceles triangle.

**8.** A measurement device according to claim 6, wherein the fifth wheel connection comprises a king pin, and where the isosceles sides of the isosceles triangle are provided equidistant to a centre of the king pin.

**9.** A measurement device according to claims 6, wherein the fifth wheel connection is provided with three load cells and where the three load cells are provided in an equilateral triangle.

**10.** A measurement device according to claim 9, wherein the fifth wheel connection comprises a king pin, and where the equilateral sides of the isosceles triangle are provided equidistant to a centre of the king pin.

**11.** A measurement device according to claims 6, wherein the fifth wheel connection is provided with four load cells and where the four load cells are provided in a square.

**12.** A measurement device according to claim 11, wherein the fifth wheel connection comprises a king pin, and where the sides of the square are provided equidistant to a centre of the king pin.

**13.** A measurement device for measuring the load on a truck comprising a tractive unit and a trailer, the tractive unit and the trailer being mutually joined by means of a fifth wheel connection, and said truck having a load received in a number of load-receptors of at least the trailer, optionally of both the tractive unit and the trailer, said measurement device comprising load cells provided between the number of load-carrying units and the number of load-receptors of the tractive unit and the trailer of the truck, respectively, and said fifth wheel connection being provided with a number of load cells, and said load cells being provided for measuring only loads in a downward orientated direction perpendicular to a measuring plane of a number of the load cells and where simultaneous locking is provided of any mutual displacement between the tractive unit and the trailer in any oblique direction to the downward orientated direction.

**14.** A measurement device for measuring the load on a truck comprising a tractive unit and a trailer, the tractive unit and the trailer being mutually joined by means of a fifth wheel connection, and said truck having a load received in a number of load-receptors of at least the trailer, optionally of both the tractive unit and the trailer, said measurement device comprising load cells provided between the number of load-carrying units and the number of load-receptors of the tractive unit and the trailer of the truck, respectively, and said fifth whell connection at least being provided with a number of second load cells, said second load cells being provided for measuring only loads in a substantial horizontal measuring plane perpendicular to loads in the downward orientated direction

**15.** A measurement deivice according to claim 14, where said fifth wheel connection also is provided with a number of first load cells, said first load cells being provided for measuring only loads in the downward orientated direction, preferably perpendicular to the measuring plane of the number of the second load cells,

**16.** A measurement device according to claim 14 and claim 15, where the number of first load cells is three and where the number of second load cells is two, and where the second load cells preferably is capable of measuring loads in individually perpendicular directions.

**17.** A measurement device for measuring the load on a truck consisting of a tractive unit and a number of load-carrying units, and said truck having a load received in a number of load-receptors of the truck, said measurement device comprising load cells provided between the number of load-carrying units and the number of load-receptors of the tractive unit, and said load cells being provided for measuring only loads in a downward orientated direction perpendicular to a measuring plane of a number of the load cells and where simultaneous locking is provided of any mutual displacement between the number of load carrying units of the tractive unit in any oblique direction to the downward orientated direction.

**18.** A measurement device according to claim 17, wherein the measurement device comprises guides and sleeves along which the guides may slide, and where the guides are orientated along axes in the downward orientated direction.

**19.** A measurement device according to any of the preceding claims, wherein longitudinally extending load transferring means are provided between a rear part of the chassis frame of the tractive unit and a front part of the chassis frame of the trailer, said load transferring means being directed in a direction substantially parallel to the measuring plane of a number of the load cells, and where the load transferring means are provided with load measurement means, and where the load transferring means are capable of transferring loads directed in a longitudinal direction between the tractive unit and the trailer, and where the load measurement means are intended for measuring the load that the load transferring means are transferring between the tractive unit and the trailer.

**20.** A measurement device according to claim 19, where the longitudinally extending load transferring means is constituted by a rod extending along the truck in a position beneath a load-carrying vessel, and said rod being elastically extendable to substantially horizontal loads along planes parallel to the measuring plane of a number of the load cells with an extension being greater in relation to the load than an extension of the load-carrying vessel in relation to the substantially horizontal load.

**12.** A measurement device according to claim 20, where the longitudinally extending load transferring means is constituted by a wire, preferably a spring loaded wire, extending along the truck in a position beneath the load-carrying vessel, and said wire, or preferably said spring, being elastically extendable to substantially horizontal loads along planes parallel to the measuring plane of a number of the load cells with an extension being greater than an extension of the load-carrying vessel in relation to the substantially horizontal load.

**22.** A measurement device according to any of the preceding claims wherein longitudinally extending load transferring means are provided between the chassis of the tractive unit and a the trailer, said load transferring means being directed in a direction substantially parallel to the measuring plane of a number of the load cells, and where the load transferring means are provided with load measurement means, and where the load transferring means are capable of transferring loads directed in a longitudinal direction between the chassis of the tractive unit and the trailer, and where the load measurement means are intended for measuring the load that the load transferring means are transferring between the tractive unit and the trailer.

**23.** A connection between a tractive unit and a trailer, the tractive unit and the trailer being mutually joined by means of a fifth wheel connection, said fifth wheel connection comprising a king-pin attached perpendicular to the plane of an intermediate plate, and where the intermediate plate is capable of displacing in at least a substantially horizontal plane, and where the displacing is biased by spring members.

**24.** A connection according to claim 24, where an annular member is provided around the intermediate plate and establish a cavity within which the intermediate plate is capable of displacing, and where a number of spring members projects from the annular member towards the cavity within the annular member, where front ends of the spring members are intended for abutting an outer circumference of the intermediate plate, and where the spring members are capable of taking up loads from the king-pin and the intermediate plate in at least a substantial horizontal plane.

**25.** A connection according to claim 23 or claim 24, where the intermediate plate is contained in the cavity within the annular member and the intermediate plate also is contained in the cavity between a bottom plate and a top plate between which the annular member is placed, and where the intermediate plate by the bottom plate and the top plate is limited in displacement in a vertical direction.

**26.** A measurement device according to any of claims 1-22, and to be used in combination with a connection according to any of claims 23-25, said measurement device comprising at least a number of second load cells for measuring loads in a substantial horizontal direction, and where the measurement is provided by measuring a substantial horizontal displacement of a king-pin and of an intermediate plate which the king-pin is attached to in relation to an annular member within which the intermediate plate is contained.

**27.** A measurement device according to any of claims 1-22 and claim 26, and to be used in combination with a connection according to any of claims 22-24, said measurement device also comprising a number of first load cells for measuring loads in a substantial vertical direction, and where the measurement is provided by measuring a substantial vertical displacement of a king-pin unit which are attached to the load cells in relation to a chassis of a trailer, alternatively in relation to a chassis of a tractive unit, which the load cells are attached to.

**28.** A measurement device according to any of claims 1-18 and either of claims 26-28, where the load cells are provided with strain gauges for measuring the load on the load cells.

**29.** A measurement device according to any of claims 19-23 and either of claims 26-28, where the load measurement means are strain gauges applied to the load measurement means for measuring the load transferred by the load transferring means.

**30.** A measurement device according to any of claims 1-18 and either of claims 26-28, where the load cells are provided with capacitive reactance load measuring means.

**31.** A measurement device according to any of claims 19-23 and either of claims 26-28, where the load measurement means are capacitive resistors applied to the load measurement means for measuring the load transferred by the load transferring means.

**32.** A measurement device according to any of claims 1-25 and either of claims 26-28, where the trailer is provided with a chassis frame extending at least from the fifth wheel connection to rearmost wheels of the trailer, and where the rearmost wheels are mounted to the chassis frame, and where also the load-carrying vessel is mounted to the chassis frame.

**33.** A measurement device according to any of claims 1-25 and either of claims 26-28, where the trailer is provided with a chassis frame extending from a position behind the fifth wheel connection to rearmost wheels of the trailer, and where the rearmost wheels are mounted to the chassis, and where the load-carrying vessel at least extend from the fifth wheel connection to the chassis frame.

**34.** A measurement device according to any of claims 1-25 and either of claims 26-28, where the trailer is provided with a number of wheel-bearing structures being mounted along the trailer, and where the wheels of the trailer are mounted to the wheel-bearing structures, and where the load-carrying vessel at least extend from the fifth wheel connection to a wheel bearing structure.
